# EUROPÄISCHE PATENTSCHRIFT

(11) **EP 0 599 111 B1**
(45) Veröffentlichungstag und Bekanntmachung des Hinweises auf die Patenterteilung: **21.01.1998**
(21) Anmeldenummer: 93117939.4
(22) Anmeldetag: 05.11.1993
(51) Int. Cl.: H02B 1/01

(54) **Zählerplatz oder Verteiler einer elektrischen Hausinstallation**
Mounting for meters or distributions for a domestic electric installation
Montage pour tableaux de comptage ou de distribution d'une installation domestique de l'électricité

(30) Priorität: 27.11.1992 DE 9216165 U
(43) Veröffentlichungstag der Anmeldung: 01.06.1994
(73) Patentinhaber: HAGER ELECTRO GmbH, D-66131 Saarbrücken (DE)
(72) Erfinder: Fetzer, Helmut, D-66130 Saarbrücken (DE); Hein, Peter, D-66386 St. Ingbert (DE); Rudel, Werner, D-66129 Saarbrücken (DE)
(74) Vertreter: Bernhardt, Winfrid, Dr.-Ing.

(56) Entgegenhaltungen:
- EP-A- 0 144 955
- EP-A- 0 503 106
- DE-A- 2 654 590

## Beschreibung

Die Erfindung betrifft einen Zählerplatz oder Verteiler, insbesondere einer elektrischen Hausinstallation, in dem an Tragschienen einer Unterkonstruktion unmittelbar oder über Zwischenstücke Geräte anzubringen sind, wie Zähler, Sammelschienen, Schaltgeräte, Schutzschalter, Schmelzsicherungen u.a..

Zählerplätze und Verteiler gehören in der Hausinstallation eng zusammen und werden regelmäßig von denselben Herstellern angeboten. Insofern ist ein möglichst einheitlicher Aufbau aus möglichst gleichen Elementen anzustreben.
Dem stehen jedoch sowohl technische als auch organisatorische Hindernisse entgegen, letztere in Gestalt von Industrienormen und anderen Bestimmungen, die überdies in verschiedenen Ländern teilweise verschieden sind.
So können die Tragschienen der Unterkonstruktion eines Zählerplatzes nur eine geringere Breite haben als diejenigen eines Verteilers. Für ihre unter Platzgesichtspunkten mögliche Anwendung in Verteilern reicht aber ihre Festigkeit nicht aus. Die in den Verteilern verwendeten Tragschienen können mit ihrer vorhandenen oder einer ähnlichen Querschnittsform nicht in der Breite auf das für die Zählerplätze erforderliche Maß verringert werden, ohne die für die Verteiler benötigte Festigkeit zu verlieren.

Aus dem Dokument EP-A-0 144 955 ist ein Rahmengestell eines Schaltschrankes bekannt, bestehend aus mindestens zwölf miteinander verbundenen Rahmenschenkeln desselben Hohlprofils, bei dem das Hohlprofil mit Lochreihen versehen ist und mit zwei senkrecht zueinander stehenden Kantenseiten eine Kante bildet, bei dem der Kante abgekehrt am Hohlprofil zwei Profilschenkel angebracht sind, die jeweils parallel zu der zugeordneten Kantenseite ausgerichtet sind, und bei dem die Kanten aller Rahmenschenkel im Bezug auf den Innenraum des Rahmengestells gleich angeordnet sind.
Speziell ist vorgesehen, daß das Hohlprofil als Vierkantprofil von quadratischem Querschnitt ausgebildet ist, daß die Kanten aller miteinander verbundener Rahmenschenkel zum Innenraum des Rahmengestells gerichtet sind, daß die Profilschenkel Verlängerungen der zugeordneten Kantenseiten sind, wobei der eine Profilschenkel noch einmal eine Abwinkelung aufweist und an dem anderen Profilschenkel ein Falz gebildet ist, mit dem das aus Blech gekantete Hohlprofil geschlossen ist, daß die Kantenseiten symmetrisch zur Kante mit gleichen Lochreihen versehen sind, daß die die Vorderseite und die Rückseite des Rahmengestelles bildenden Rahmenschenkel mit ihren abstehenden Profilschenkeln einen senkrecht zur Vorder- bzw. Rückseite stehenden, rahmenartigen Dichtungssteg bilden und daß die die vertikalen Seiten des Rahmengestelles bildenden Rahmenschenkel mit ihren abstehenden Profilschenkeln einen senkrecht zu den vertikalen Seiten stehenden rahmenartigen Anlagesteg bilden.
Die Querschnittsform des Hohlprofils steht solchermaßen in Wechselbeziehung mit den Erfordernissen des betreffenden Rahmengestelles: Die Verlagerung der Kanten auf die Innenseite des Rahmengestelles und die symmetrische Einbringung von Lochreihen in die aufeinanderstoßenden Kantenseiten bringen an allen Rahmenschenkeln des Rahmengestelles jeweils eine Anbaumöglichkeit in zwei Richtungen, was den Einbau von Tragschienen, Schaltgeräten und dgl. wesentlich erleichtert. Die Profilschenkel der so ausgerichteten Rahmenschenkel wirken als Dichtungsstege und Anlagerahmen, so daß mit zugeordneten Dichtungselementen allseitig eine abgedichtete Aneinanderreihung von Rahmengestellen dieser Art möglich ist und auch die angebrachten Abschlußwände und Türen eindeutig abgedichtet werden können. Stoßen Dichtungsstege aufeinander, werden H-förmige Dichtungselemente verwendet.

Der Erfindung liegt die Aufgabe zugrunde, eine für Zählerplätze und Verteiler gemeinsame Tragschiene der Unterkonstruktion zu schaffen, die mit vertretbaren Kosten herzustellen ist.

Die erfindungsgemäße Tragschiene, die diesen Zweck erfüllt, besteht aus einem aus verzinktem Blechband gekanteten Hohlprofil von länglich-rechteckigen Querschnitt, das durch einen in Verlängerung der einen Schmalseitenwand seitlich abstehenden Falz geschlossen ist, wobei die Tragschienen an ihren Schmalseitenwänden eine Breite von 9 bis 11 mm und an ihren breiteren Seitenwänden eine Breite von 24 bis 28 mm haben.

Mit der Herstellung aus verzinktem Blechband durch Kanten in ein Hohlprofil, das nicht durch Schweißen geschlossen wird, bleibt der Aufwand für das Verzinken niedriger als im Falle der Verzinkung eines geschlossenen Profils oder der Nachverzinkung an einer Schweißnaht; das Blechband braucht zur Verzinkung nur mit einer nach unten gelegten Schlaufe durch ein Zinkbad geführt zu werden. Die Kantvorgänge können bei den in Betracht stehenden Querschnittsabmessungen allerdings nur an einem Blech durchgeführt werden, dessen Dicke im Vergleich mit der Blechdicke der bisherigen Verteilertragschienen erheblich verringert ist, etwa von 1,5 mm auf 1 mm. Damit wird, zusätzlich zu der erwähnten Verringerung in der Breite, noch einmal an Festigkeit eingebüßt. Dies wiederum wird ausgeglichen erstens durch das für den Falz hinzukommende Material und zweitens und vor allem durch die aus der geometrischen Anordnung des Falzes folgende Versteifung: Das erfindungsgemäß angewandte Profil ist eine Kombination aus Kastenprofil und Winkelprofil. Diese fängt hinsichtlich der Festigkeit auch den Nachteil auf, der mit einem Falz statt einer Schweißnaht verbunden ist. Der als Steg abstehende Falz verbreitert zwar hier die Tragschiene über das für Zählerplätze geltende Höchstmaß. Die Verbreiterung liegt aber praktisch nur in einer Fläche und stört nicht; im wesentlichen hat das Profil überall die schmale Abmessung. Die verbreiterte Anlagefläche der Tragschiene an deren eigener Basis erhöht jedoch die Kippfestigkeit der Anordnung. Nötigenfalls können auch an dem Falz unmittelbar Befestigungsmittel angebracht werden.
In der Gesamtschau wird die angegebene Tragschiene allen Anforderungen gerecht.

Vorzugsweise ist in dem Falz die genannte Schmalseitenwand um die Blechdicke zurück gekröpft und von einer Abwinkelung von der anschließenden breiteren Seitenwand und einer Umbiegung der Abwinkelung umschlossen. Diese Gestaltung führt zu größerer Festigkeit als die, allerdings gleichfalls mögliche, Umkehrung der Umschließung.

Die Vorteile der angegebenen Tragschiene ergeben sich hauptsächlich in dem genannten Abmessungsbereich zwischen 9 und 11 mm Breite der Schmalseitenwände und 24 bis 28 mm Breite der breiteren Seitenwände bei einer Blechdicke zwischen 0,9 und 1,1 mm.
Der Falz wird in der Regel nur eine etwas geringere Breite als die Schmalseitenwand haben.

Eine weitere vorteilhafte Ausgestaltung liegt in einer flachen Einsenkung der dem Falz abgewandten breiteren Seitenwand des Hohlprofils.
Die Einsenkung versteift, hat aber auch herstellungstechnische Vorteile als eine Führung des Bandes bei den weiteren Kantvorgängen.

Weitere vorteilhafte Ausgestaltungen sind in der folgenden Beschreibung eines in den Zeichnungen dargestellten Ausführungsbeispieles der Erfindung angeführt.

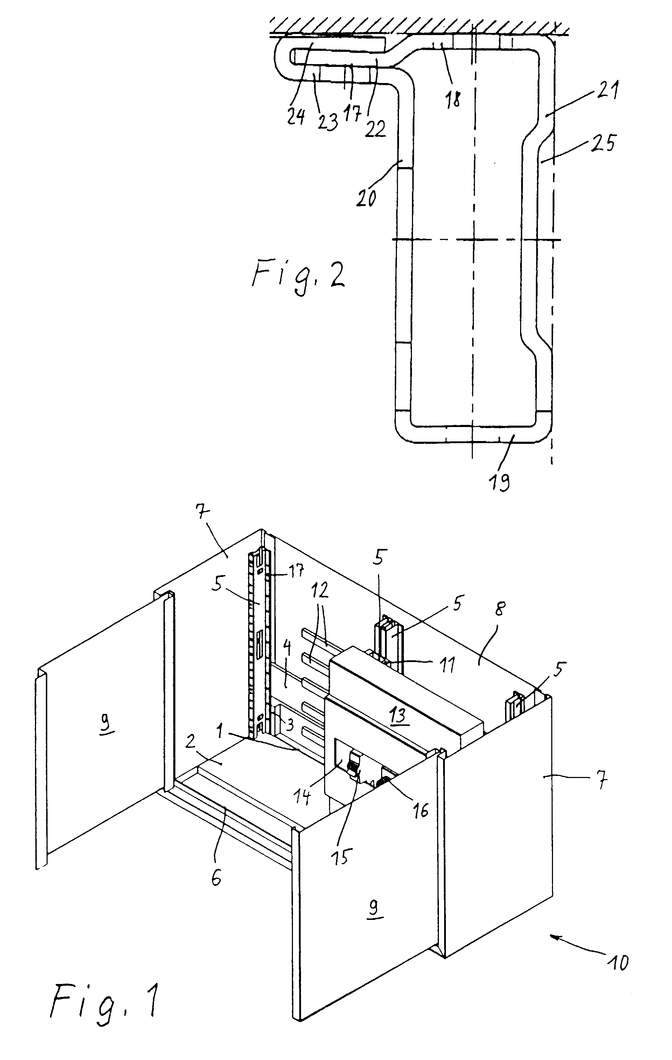

- Fig. 1: zeigt einen oben abgeschnittenen Verteilerschrank in isometrischer Darstellung,
- Fig. 2: zeigt eine Tragschiene im Querschnitt und
- Fig. 3: zeigt die Tragschiene in kleinerem Maßstab in isometrischer Darstellung.

Ein Basisteil 1 aus Kunststoff besteht aus einer waagerechten Grundplatte 2, drei an deren hinterer Kante nach oben abgewinkelten Halteteilen 3 und einer die Halteteile 3 verbindenden flachen Leiste 4.
Von der Grundplatte 2 aus erstrecken sich nach oben vier mittels Schrauben an den Halteteilen 3 befestigte Tragschienen 5. Sie sind an ihren abgeschnittenen oberen Enden in gleicher Weise an den Halteteilen eines gleichen, umgekehrt angeordneten Basisteils befestigt.
Gleichfalls an den beiden Basisteilen 1 befestigt sind ein Boden 6, zwei Seitenwände 7, eine Rückwand 8 und eine Decke, sämtlich aus Blech, die die Anordnung zu einem mit zwei Türen 9 versehenen Verteilerschrank 10 ergänzen.

An den beiden mittleren, gemeinsam an demselben Halteteil 3 befestigten Tragschienen 5 und an der rechten Tragschiene 5 sind über zwei isolierende Zwischenstücke 11 fünf Sammelschienen 12 bekannter Art aus Kupfer befestigt. Vor diesen befindet sich unter einer Haube 13 ein Raum für Anschlüsse. Aus einem Fenster 14 der Haube 13 ragen nach vorne ein Leitungsschutzschalter 15 und ein anderes Gerät 16 heraus.

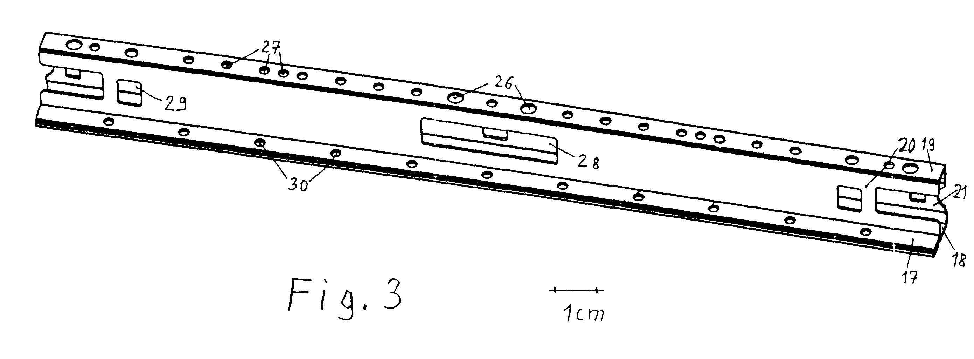

Die Tragschienen 5 sind Hohlprofile des in Fig. 2 gezeigten, länglich-rechteckigen Querschnitts mit einem Falz 17 als seitlich abstehendem Steg. Die beiden Schmalseitenwände sind mit 18 und 19 bezeichnet, die beiden breiteren Seitenwände mit 20 und 21. Der Falz 17 ist gebildet durch eine gekröpfte Verlängerung 22 der Schmalseitenwand 18 und eine Abwinkelung 23 von der Seitenwand 20 sowie eine Umwinkelung 24. Durch Riffelung der Verlängerung 22 und der sie einschließenden Abwinkelung 23 und Umwinkelung 24 ist eine annähernd kraftschlüssige Verbindung geschaffen. In der Seitenwand 21 ist eine Einsenkung 25 von flach-trapezförmigem Querschnitt gebildet.
Die geringere Breite der Tragschiene 5 beträgt 9,85 ± 0,15 mm, die größere Breite beträgt 26 ± 0,2 mm.

Wie Fig. 3 erkennen läßt, sind in der Schmalseitenwand 19 größere Bohrungen 26 von 4,3 mm Durchmesser und kleinere Bohrungen 27 von 3,2 mm Durchmesser angeordnet. Mit den größeren Bohrungen 26 fluchten Bohrungen von 5,2 mm Durchmesser in der anderen Schmalseitenwand 18.
Durch solche fluchtende Bohrungen hindurch sind die Tragschienen 5 an den Halteteilen 3 angeschraubt. Der kleinere Durchmesser der oberen Bohrungen 26 hat den Zweck, die Schrauben, die nur mit ihrem Gewinde durch sie hindurchgedreht werden können, unverlierbar zu halten. Die an den Tragschienen 5 befestigten Zwischenstücke 11 sowie ggf. weitere Zwischenstücke oder Geräte sind mittels Schrauben befestigt, die gewindeschneidend in die kleineren Bohrungen 27 greifen.
Rechteckige Ausnehmungen 28 und 29 in der Seitenwand 20 dienen zum Einrasten von Zwischenstücken, die zugleich mit einem kleinen Bolzen in eine darüber befindliche Bohrung 26 greifen, insbesondere Stützen zum Befestigen von Hauben oder Abdeckungen. Bohrungen 30 an dem Falz 17 nur in der Abwinkelung 23 sind in gleichen Abständen angeordnet, die einem durch Norm vorgegebenen Raster entsprechen, derart, daß die Reihe der Bohrungen 23 unmittelbar als Raster-Maßstab dienen kann. Außerdem lassen sich die Bohrungen 30 als halbfertige Bohrungen, die nur noch vervollständigt werden müssen, verwenden, wenn der Falz 17 unmittelbar festgeschraubt werden soll.

## Patentansprüche

1. Zählerplatz oder Verteiler (10), insbesondere einer elektrischen Hausinstallation, in dem an Tragschienen (5) einer Unterkonstruktion (3-5) unmittelbar oder über Zwischenstükke (11) Geräte (12;13;15;16) anzubringen sind, wie Zähler, Sammelschienen (12), Schaltgeräte (16), Schutzschalter (15),
Schmelzsicherungen u.a.,
dadurch gekennzeichnet,
daß die Tragschienen (5) aus einem aus verzinktem Blechband gekanteten Hohlprofil von länglich-rechteckigem Querschnitt bestehen, das durch einen in Verlängerung der einen Schmalseitenwand (18) seitlich abstehenden Falz (17) geschlossen ist, wobei die Tragschienen (5) an ihren Schmalseitenwänden (18;19) eine Breite von 9 bis 11 mm und an ihren breiteren Seitenwänden (20;21) eine Breite von 24 bis 28 mm haben.

2. Zählerplatz oder Verteiler nach Anspruch 1,
dadurch gekennzeichnet,
daß in dem Falz (17) die genannte Schmalseitenwand (18,22) um die Blechdicke zurück gekröpft ist und von einer Abwinkelung (23) von der anschließenden breiteren Seitenwand (20) und einer Umbiegung (24) der Abwinkelung (23) umschlossen ist.

3. Zählerplatz oder Verteiler nach Anspruch 2,
dadurch gekennzeichnet,
daß der Falz (17) annähernd gleiche Breite wie die Schmalseitenwand (18) hat.

4. Zählerplatz oder Verteiler nach einem der Ansprüche 1 bis 3,
dadurch gekennzeichnet,
daß an der dem Falz (17) abgewandten breiteren Seitenwand (21) eine flache Einsenkung (25) gebildet ist.

5. Zählerplatz oder Verteiler nach einem der Ansprüche 1 bis 4,
dadurch gekennzeichnet,
daß die Tragschiene (5) in den beiden Schmalseitenwänden (18;19) fluchtende Bohrungen (26) zur Befestigung der Tragschiene (5) mittels jeweils beide Bohrungen durchsetzender Schrauben aufweist, vorzugsweise ferner Bohrungen (30) in dem Falz (17) für eventuelle zusätzliche Befestigungsschrauben.

6. Zählerplatz oder Verteiler nach einem der Ansprüche 1 bis 5,
dadurch gekennzeichnet,
daß die Tragschiene (5) in der von dem Falz (17) entfernten Schmal seitenwand (19) Bohrungen (27) zur Befestigung der Geräte (12;13;15;16) oder Zwischenstücke (11) mittels gewindeschneidender Schrauben aufweist.

7. Zählerplatz oder Verteiler nach einem der Ansprüche 1 bis 6,
dadurch gekennzeichnet,
daß die Tragschiene (5) in mindestens einer (21) der beiden breiteren Seitenwände (20;21) rechteckige Ausnehmungen (28,29) aufweist zur Aufnahme von Steckbefestigungsteilen der Geräte (12;13;15;16) oder Zwischenstücke (11), insbesondere Stützen zum Befestigen von Hauben oder Abdeckungen.

8. Zählerplatz oder Verteiler nach einem der Ansprüche 1 bis 7,
dadurch gekennzeichnet,
daß die Tragschienen (5) an ihren Schmalseitenwänden (18;19) eine Breite von 9,85 ±0,15 mm und an ihren breiteren Seitenwänden (20;21) eine Breite von 26 ±0,2 mm haben.

9. Zählerplatz oder Verteiler nach einem der Ansprüche 1 bis 8,
dadurch gekennzeichnet,
daß die Blechdicke der Tragschienen (5) 0,9 mm bis 1,1 mm, vorzugsweise 1,0 mm, beträgt.

## Claims

1. Meter panel or distribution board (10), especially for a domestic electric installation, in which devices (12; 13; 15; 16) such as meters, busbars (12), switching devices (16), protection devices (15), fuses, etc., are to be secured directly or via spacers (11) to mounting rails (5) of a substructure (3-5),
characterized in that
the mounting rails (5) comprise a hollow section folded from a galvanized sheet metal strip and having an elongated rectangular cross section, said hollow section being closed by a laterally protruding bead (17) in the extension of the one narrow side wall (18), the mounting rails (5) having a width of 9 to 11 mm at their narrow side walls (18; 19) and a breadth of 24 to 28 mm at their wider side walls ( 20; 21).

2. Meter panel or distribution board according to claim 1,
characterized in that
in the bead (17) the given narrow side wall (18, 22) is offset by the thickness of the sheet metal and is enclosed by a bent portion (23) of the adjacent wider side wall (20) and a fold (24) in said bent portion (23).

3. Meter panel or distribution board according to claim 2,
characterized in that
the bead (17) has approximately the same width as the narrow side wall (18).

4. Meter panel or distribution board according to any of claims 1 to 3,
characterized in that
a shallow depression (25) is formed in the wider side wall (21) opposite the bead (17).

5. Meter panel or distribution boards according to any of claims 1 to 4,
characterized in that
the mounting rail (5) has aligned bores (26) in the two narrow side walls (18; 19), for fastening the mounting rail (5) by means of screws passing through each pair of bores, the mounting rail (5) further preferably having bores (30) in the bead (17) for possible additional fastening screws.

6. Meter panel or distribution board according to any of claims 1 to 5,
characterized in that
the mounting rail (5) has bores (27) in the narrow side wall (19) remote from the bead (17), for fastening the devices (12; 13; 15; 16) or spacers (11) by means of thread-cutting screws.

7. Meter panel or distribution board according to any of claims 1 to 6,
characterized in that
the mounting rail (5) has rectangular cutouts (28, 29) in at least one (21) of the two wider side walls (20; 21), for receiving plug-in attachment parts of the devices (12; 13; 15; 16) or spacers (11), especially brackets for securing caps or coverings.

8. Meter panel or distribution board according to any of claims 1 to 7,
characterized in that
the narrow side walls (18; 19) of the mounting rails (5) have a width of 9.85 ± 0.15 mm, and the wider side walls (20; 21) have a breadth of 26 ± 0.2 mm.

9. Meter panel or distribution board according to any of claims 1 to 8,
characterized in that
The sheet metal thickness of the mounting rails (5) is 0.9 mm to 1.1 mm, preferably 1.0 mm.

## Revendications

1. Armoire de complage ou armoire de distribution (10), en particulier d'une installation domestique d'électricité, présentant un bâti (3-5) avec des profilés support (5) sur lesquels on disposer, directement ou à l'aide de pièces de raccord (11), des appareils (12; 13; 15; 16), tels que des compteurs, des jeux de barre (12), des appareils de commande (16), des appareils de protection (15), des fusibles, etc, caractérisé en ce que les profilés support (5) sont constitués par un profil creux plié, en tôle galvanisée, avec une section rectangulaire longitudinale, qui est fermé par une agrafure (17) s'écartant latéralement et se trouvant dans le prolongement d'un petit côté (18), les petits côtés (18; 19) des profilés support (5) présentant une largeur comprise entre 9 et 11 mm et les côtés larges (20; 21) présentant une largeur comprise entre 24 et 28 mm.

2. Armoire de complage ou armoire de distribution selon la revendication 1, caractérisé en ce que, dans l'agrafure (17), le petit côté (18, 22) mentionné est recoudé de la largeur de la tôle et est entouré par un pli rectangulaire (23) du côté large adjacent (20) et par un repli (24).

3. Armoire de complage ou armoire de distribution selon la revendication 2, caractérisé en ce que l'agrafure (17) présente quasiment la même largeur que le petit côté (18).

4. Armoire de complage ou armoire de distribution selon une quelconque des revendications 1 à 3, caractérisé en ce que le côté large (21) à l'opposé de l'agrafure (17) comporte un renfoncement (25) plat.

5. Armoire de complage ou armoire de distribution selon une quelconque des revendications 1 à 4, caractérisé en ce que le profilé support (5) comporte, dans les deux petits côtés (18; 19), des trous (26) alignés pour la fixation des profilés support (5) à l'aide de vis traversant chaque fois les deux trous, ainsi que de préférence également des trous (30) situés dans l'agrafure (17), le cas échéant pour des vis de fixation supplémentaires.

6. Armoire de complage ou armoire de distribution selon une quelconque des revendications 1 à 5, caractérisé en ce que le profilé support (5) présente, dans le petit côté (19) à l'opposé de l'agrafure (17), des trous (27) pour la fixation des appareils (12; 13; 15; 16) ou des pièces de raccord (11) à l'aide de vis autotaraudeuses.

7. Armoire de complage ou armoire de distribution selon une quelconque des revendications 1 à 6, caractérisé en ce que le profilé support (5) comporte des évidements (28, 29) rectangulaires, dans au moins un (21) des deux côtés larges (20; 21), destinés à recevoir des pièces de fixation enfichables des appareils (12; 13; 15; 16) ou des pièces de raccord (11), en particulier des supports pour la fixation de capots ou dispositifs de recouvrement.

8. Armoire de complage ou armoire de distribution selon une quelconque des revendications 1 à 7, caractérisé en ce que les petits côtés (18, 19) des profilés support (5) présentent une largeur de 9,85 +/- 0,15 mm et les côtés larges (20, 21) une largeur de 26 +/- 0,2 mm.

9. Armoire de complage ou armoire de distribution selon une quelconque des revendications 1 à 8, caractérisé en ce que l'épaisseur de la tôle des profilés support (5) est comprise entre 0,9 mm et 1,1 mm, de préférence de 1,0 mm.
